# EUROPÄISCHE PATENTSCHRIFT

(11) **EP 3 835 040 B1**
(45) Veröffentlichungstag und Bekanntmachung des Hinweises auf die Patenterteilung: **12.08.2026**
(21) Anmeldenummer: 20209812.5
(22) Anmeldetag: 25.11.2020
(51) Int. Cl.: B29C 70/32, B29C 70/86

(54) **SPALTROHR FÜR EINE NASSLÄUFERPUMPE UND VERFAHREN ZU DESSEN HERSTELLUNG**
GAP SLEEVE FOR A WET RUNNER PUMP AND METHOD OF MANUFACTURING THE SAME
GAINE À FENTE POUR UNE POMPE À ROTOR NOYÉ ET SON PROCÉDÉ DE FABRICATION

(30) Priorität: 13.12.2019 DE 102019134334
(43) Veröffentlichungstag der Anmeldung: 16.06.2021
(73) Patentinhaber: WILO SE, 44263 Dortmund (DE)
(72) Erfinder: Küster, Bernd, 44263 Dortmund (DE); Barth, Dennis, 44263 Dortmund (DE); Brunken, Dr. Hayo, 44263 Dortmund (DE)
(74) Vertreter: Cohausz Hannig Borkowski Wißgott

(56) Entgegenhaltungen:
- EP-A1- 0 291 639
- EP-A1- 3 498 384
- EP-A2- 1 231 048
- WO-A2-2014/063894
- DE-A1- 10 322 465
- DE-A1- 102013 004 339
- DE-A1- 102016 011 721
- JP-A- S5 715 873
- US-A- 5 062 456
- US-A- 5 770 313
- US-A1- 2009 026 878

## Beschreibung

Die Erfindung betrifft ein Spaltrohr für eine Nassläuferpumpe, das aus einem gewickelten, endlosfaserverstärkten Kunststoffrohr besteht, sowie ein Verfahren zur Herstellung eines solchen Spaltrohres, indem ein Band aus einem endlosfaserverstärkten Kunststoff auf einen Wickelkern zwei- oder mehrlagig aufgewickelt und anschließend zur Bildung eines formstabilen Kunststoffrohres konsolidiert, insbesondere aufgeschmolzen wird.

Gewickelte Spaltrohre aus faserverstärktem Kunststoff sind seit langem im Stand der Technik bekannt, beispielsweise aus der europäischen Patentanmeldung EP 1231048 A2, welche lehrt, ein extrudiertes, dünnwandiges Kunststoffrohr mit einer versteifenden Schicht zu überziehen oder zu umwickeln, wobei ein Kunstharz zwischen dieser Schicht und dem Rohr verwendet wird.

Ein Spaltrohr wird bei einer Nassläuferpumpe eingesetzt, um den flüssigkeitsgefüllten, "nassen" Rotorraum, der sich regelmäßig innerhalb des Spaltrohres befindet, räumlich und hermetisch dicht vom "trockenen" Stator zu trennen, der das Spaltrohr regelmäßig außen umgibt, vergleiche die Schrift DE 102013004339 A1 in Absatz [0010]. Eine Nassläuferpumpe ist eine Kreiselpumpe, wobei innerhalb des Spaltrohres der Rotor des die Kreiselpumpe antreibenden Elektromotors dreht, und der Rotorraum in der Regel zur Pumpenkammer hin offen und dadurch von der Förderflüssigkeit der Pumpe gefüllt ist. Die Förderflüssigkeit kühlt einerseits den Rotor und den Stator, und schmiert andererseits die die gemeinsame Motor-Pumpenwelle lagernden Gleitlager. Nassläuferpumpen werden häufig als Umwälzpumpen in Heizungs- und Kühlanlagen, aber auch in Trinkwasseranlagen und zahlreichen weiteren Anwendungen eingesetzt, wie Kraftstoffpumpen oder Brunnenpumpen. Bereits aus jedem einzelnen Anwendungsfall resultieren zahlreiche Anforderungen, die das Spaltrohr einsatzbedingt erfüllten muss. Entsprechend höher sind die Anforderungen, wenn die Nassläuferpumpe bzw. dessen Spaltrohr für sämtliche Anwendungsfälle gleichzeitig ausgelegt und geeignet sein soll.

Die Schrift US 2009/026878 A offenbart ein ungewickeltes Spaltohr aus Kunststoff für eine Nassläuferpumpe in Gestalt einer Tauchpumpe, das innen und/ oder außen metallisiert ist, um eine hermetisch dichte Beschichtung zu bilden. Die WO 2014/063894 A2 beschreibt eine Diffusionssperrschicht für Spaltrohre.

Die wichtigste Anforderung an ein Spaltrohr ist es, einerseits einem dauerhaften statischen Druck aus dem Rotorraum zu wiederstehen, wie er beispielsweise in einer Heizungs- oder Trinkwasseranlage herrscht, andererseits aber auch den hinzukommenden dynamischen, zeitweise auftretenden Druckspritzen standzuhalten, die beispielsweise bedingt durch plötzlich öffnende oder schließende Ventile im Rohrleitungssystem entstehen (Rückschlagklappen, elektromagnetische Ventile), mit dem die Nassläuferpumpe verbunden ist, da sich die Druckstöße auch im Rotorraum bemerkbar machen. Für die meisten Anwendungen liegen die Innendrücke im Rotorraum bei maximal 6 bar Nenndruck. Bei Hochdruckanwendungen kann jedoch auch ein Innendruck von 16 bar Nenndruck vorliegen. Bei Trinkwasseranwendungen treten ferner dynamische Druckschläge bis 50 bar auf. Dieser Aufgabe kommt das faserverstärkte, gewickelte Kunststoffrohr optimal nach, da es eine hohe mechanische Belastbarkeit besitzt. Jedoch mangelt es ihm an essentiellen weiteren Eigenschaften.

So muss das Spaltrohr auch je nach gepumpten Medium chemisch und elektrochemisch beständig sein. Aufgrund von im Rotorraumraum umherwirbelnden, abrasiv wirkenden Feststoffpartikeln wie beispielsweise Korrosionsprodukte oder Sand, muss das Spaltrohr zudem abriebfest sein. Es muss ferner die Permeation von im Rotorraum befindlichen Gasen oder Wasserdampf in den Statorraum verhindern. Im Falle einer Trinkwasseranwendung muss das Spaltrohr außerdem die Anforderungen an ein Trinkwasser konformes Material erfüllen. Um die dauerhafte Trennung über die gesamte Lebensdauer der Nassläuferpumpe gewährleisten zu können, müssen die genannten Eigenschaften dauerhaft unvermindert vorliegen. Diese Anforderungen erfüllt das gewickelte Kunststoffrohr nur teilweise. Denn aufgrund des Herstellungsverfahrens besteht potenziell die Möglichkeit, dass undichte Bereiche in Form von Löchern, Kapillaren oder Grenzflächen auftreten. Ferner ist ein duroplastischer Kunststoff mit einer Matrix aus Epoxyd-Harz bei höheren Temperaturen nicht beständig gegen Glykole, die Heizungswasser oft beigemischt werden.

In manchen Konstruktionen von Nassläuferpumpen kann außerdem vorgesehen sein, dass das Spaltrohr mechanisch das Gleitlager trägt, d.h. axiale und radiale Kräfte aufnimmt. Für eine genaue Positionierung des Gleitlagers im Spaltrohr, aber auch für eine genaue Positionierung des Spaltrohres innerhalb der Nasskäuferpumpe sowie zur Abdichtung kann das Spaltrohr bestimmte Formelemente aufweisen, wie z.B. einen oder mehrere Vorsprünge, Anschläge, Nuten, Fasen etc., die durch das gewickelte Kunststoffrohr alleine nicht erreicht werden können.

Um allen Anforderungen und Anwendungen gerecht zu werden, ist bekannt, das Spaltrohr durch die Kombination eines Außenrohres und eines Innenrohres herzustellen, wobei das Außenrohr durch das gewickelte Kunststoffrohr gebildet ist und das Innenrohr ein separates, spritzgegossenes Bauteil bildet, das nach seiner Herstellung kraftschlüssig in das Außenrohr geschoben, insbesondere gepresst wird, so dass eine Presspassung zwischen den beiden Rohren besteht. Das Innenrohr ist beispielsweise aus einem glasfaserverstärkten Thermoplast, z.B. PPS (Polyphenylensulfid) mit einer Wandstärke von 0,8mm gebildet und erfüllt die Anforderungen an chemische und elektrochemische Beständigkeit, elektrische Durchschlagfestigkeit, Trinkwasserkonformität, Diffusionsdichtigkeit und Abriebfestigkeit. Aufgrund der spritzgusstechnischen Herstellung können ferner leicht Formelemente außen und /oder innen am Innenrohr vorgesehen werden. Obgleich das Innenrohr faserverstärkt ist und die eigentliche Trennung zwischen Rotor- und Statorraum bezweckt, hat es nur eine geringe mechanische Bruchfestigkeit und hält somit nicht in jeder Anwendung den jeweiligen anwendungsspezifischen Drücken stand. Diese Aufgabe übernimmt dann das Außenrohr, welches als lokale äußere mechanische Verstärkung des Innenrohrs in einem bestimmten Bereich betrachtet werden kann. Dies ist der Bereich zwischen den beiden axialen Enden.

Damit das Außenrohr seine Funktion als lokale mechanische Verstärkung des Innenrohrs entfalten kann, muss es kraftschlüssig außen auf dem Innenrohr aufliegen. Um dies zu erreichen, sind enge Toleranzen von weniger als 0,1 mm beim Außendurchmesser des Innerohres nötig, die aufgrund der vorliegenden Rohrform prozesstechnisch schwer einzuhalten sind. Ein allmählicher Verschleiß des Spritzgussform, ein Wechsel des Spritzgusswerkzeugs im Verschleißfall oder bei einer Änderung der Spaltrohrabmessungen oder von Formelementen des Spaltrohres, oder auch eine Änderung des Kunststoffmaterials für das Innenrohr, erfordern regelmäßig eine neue Validierung der Einhaltung der Toleranzen. So besitzt ein anderes Kunststoffmaterial beispielsweise eine andere Schwindung, so dass selbst auf derselben Spritzgussmaschine und unter vergleichbaren Prozessbedingungen hergestellte Spaltrohre bei unterschiedlichen Kunststoffen unterschiedliche Toleranzen haben. Die regelmäßig neue Validierung der Einhaltung der Toleranzen ist aufwändig und teuer, zumal dies für jede Motorgröße bzw. entsprechende Spaltrohrgröße (Durchmesser, Länge) zu erfolgen hat.

Des Weiteren sind Presspassung zwischen zwei runden Bauteilen aufgrund der allgemeinen Kunststofftoleranzen und Rundheitsabweichungen stets in der Praxis herausfordernd. So dürfen die beiden Rohre weder zu locker aufeinandersitzen, noch zu stark ineinander gepresst sein.

Es ist deshalb Aufgabe der vorliegenden Erfindung, ein Spaltrohr und dessen Herstellungsverfahren bereitzustellen, dass zumindest einige der genannten Nachteile überwindet.

Diese Aufgabe wird durch ein Spaltrohr mit den Merkmalen des Anspruchs 1 und ein Verfahren mit den Merkmalen des Anspruchs 11 gelöst. Vorteilhafte Weiterbildungen sind in den jeweiligen Unteransprüchen angegeben und werden nachfolgend erläutert.

Erfindungsgemäß ist ein Spaltrohr für eine Nassläuferpumpe gemäß Anspruch 1 vorgesehen. Zur Herstellung des erfindungsgemäßen Spaltrohrs wird ein Verfahren gemäß Anspruch 11 durchgeführt.

Die Beschichtung erfüllt die Funktionen des zuvor im Stand der Technik verwendeten separaten Innenrohres, das bei dem erfindungsgemäßen Spaltrohr fehlt bzw. durch die Beschichtung ersetzt ist. Je nach Art der Beschichtung kann die Abriebfestigkeit gegenüber dem reinen gespritzten Innenrohr sogar verbessert werden. Die Beschichtung ist nicht selbst formstabil, sondern wird vom Kunststoffrohr getragen. Insoweit bildet das Kunststoffrohr eine mechanische Stützstruktur für die Beschichtung. Somit ist das erfindungsgemäße Spaltrohr einteilig. Der Fügeprozess zweier Rohre und die damit verbundenen Nachteile entfallen somit. Im Stand der Technik beim Spritzgießen des Innenrohres auftretende Toleranzprobleme treten nicht auf. Ferner werden die Kosten für den Bau der Spritzgussformen für das Innenrohr eingespart. Insgesamt ist die Herstellung eines erfindungsgemäßen Spaltrohres deutlich einfacher und kostengünstiger.

Ein weiterer positiver Effekt der erfindungsgemäßen Beschichtung ist, dass sich elastomere Dichtelemente aufgrund der Beschichtung mit weniger Reibverlusten montieren lassen. Des Weiteren hat die Beschichtung den Vorteil, dass eventuelle Fehlstellen (z.B. Entformungsriefen) im Innenbereich des gewickelten Rohres von der Beschichtung abgedeckt und versigelt werden, was die Haltbarkeit und Lebensdauer des Spaltrohrs weiter absichert und Angriffsstellen für chemischabrasive Fördermedien mindert/entschärft.

Insbesondere sorgt die Beschichtung für eine chemische Beständigkeit und Dichtheit des Kunststoffrohres, da Poren und Löcher durch die Beschichtung geschlossen werden. Anders als beispielsweise bei einer Imprägnierung, die von der beschichteten Oberfläche mangels einer chemischen Bindung nur eine Oberflächenbenetzung darstellt, die nicht dauerhaft ist und wieder abgekratzt werden könnte, ist die erfindungsgemäße Beschichtung auf molekularer Ebene chemisch mit dem Kunststoffrohr verbunden. Durch die chemische Bindung, d.h. die Verbindung von Molekülen zwischen dem Kunststoffrohr und der Beschichtung, liegt eine stoffschlüssige Verbindung vor. Es wird erreicht, dass die Beschichtung eine Diffusionsbarriere bildet und somit kein Medium aus dem Rotorraum in den Statorraum diffundieren kann. Das Spaltrohr ist insoweit hermetisch mediendicht, insbesondere wasserdicht.

Zur Herstellung des Kunststoffrohres wird das Band aus dem endlosfaserverstärkten ersten Kunststoff auf einen zylindrischen Wickelkern zwei-, drei- oder mehrlagig aufgewickelt und anschließend zur Bildung eines formstabilen Kunststoffrohres konsolidiert. Das Kunststoffrohr besitzt somit die Form eines Kreiszylinders. Beim Aufwickeln kann eine Anpressrolle eine Kraft auf den Wickelkern ausüben, um das Band auf diesen zu drücken. Geeigneterweise wirkt diese Anpressrolle sogleich als Umlenkrolle für das zugeführte Band, um dieses zu spannen. Die Ausrichtung der Fasern liegt zwischen 90° und 45° zur Rohrachse und stellt sich in Abhängigkeit zum Wickelwinkel ein.

Erfindungsgemäß ist der erste Kunststoff ein thermoplastisches Polymer, beispielsweise PPS (Polyphenylensulfid), das eine gute chemische Medienresistenz besitzt. Das Konsolidieren erfolgt dann durch Aufschmelzen d.h. Erhitzen auf eine Temperatur oberhalb der Schmelztemperatur des ersten Kunststoffs. Dies kann beispielsweise mittels eines Lasers, einem Infrarot-Strahler oder mittels Heißgas erfolgen, der oder das geeigneterweise auf den Zwickel zwischen Anpressrolle und Wickelkern gerichtet ist. Die Endlosfasern werden durch das Aufschmelzen nahezu vollständig von der Polymermatrix umschlossen bzw. in dieser eingebettet, wobei benachbarte Lagen zu einem formstabilen Verbund verschweißt werden bzw. stoffschlüssig verschmelzen. Als Band, im Fachjargon auch als Tape bezeichnet, kann ein unidirektional faserverstärktes, thermoplastisches Halbzeug zur Herstellung von Faserverbundbauteilen (FVK) verwendet werden. Dies verleiht dem Rohr eine besonders hohe Festigkeit.

Gemäß einer anderen, nicht beanspruchten Ausführungsvariante kann der erste Kunststoff ein Duroplast mit einer Epoxid-Matrix sein. Zu deren Konsolidierung kann der entsprechende chemische Vernetzungsprozess ebenfalls thermisch aktiviert werden.

Des Weiteren ist es von Vorteil, wenn die Endlosfasern Kohlefasern sind. Diese führen zu einer besonders hohen Festigkeit des Kunststoffrohres, das nachfolgend auch als CFK-Rohr (Carbonfaser-verstärkter Kunststoff) bezeichnet wird. Des Weiteren ermöglichen die Kohlefasern ein Aufschmelzen es ersten Kunststoffs mittels Laser.

Zur Aufbringung der Beschichtung kommen unterschiedliche Techniken in Frage. Selbiges gilt für das Material des zweiten Polymers, wobei das Verfahren vom zweiten Polymer bzw. das zweite Polymer vom Aufbringungsverfahren abhängig ist, da die verschiedenen Polymere unterschiedlich verarbeitet werden müssen bzw. ein bestimmtes Verfahren nicht zulässt, jegliches Polymer zu verarbeiten.

Beispielsweise kann die Beschichtung bevorzugt durch Abscheidung aus der Flüssigphase erzeugt werden. Dies kann in einem Niedrigtemperatur-Verfahren (<400°C) erfolgen. Hierzu kann die Beschichtung durch Eintauchen des Kunststoffrohres in ein Bad des zweiten Polymers (sogenanntes Dip-Coating) erzeugt werden. Dies bewirkt eine vollständige und stoffschlüssige Beschichtung des Kunststoffrohres innen und außen. Alternativ dazu kann die Beschichtung durch Aufsprühen aufgebracht werden. Hierbei können das Kunststoffrohr und eine im Innenraum des Kunststoffrohres anzuordnende Düse relativ zueinander bewegt werden, während das zweite Polymer aus der Düse austritt. Gemäß einer weiteren Alternative kann die Beschichtung durch Abscheidung aus der Gasphase erzeugt werden. Dies kann durch Niedertemperatur-Aufdampfen einer reaktiven, in einem Trägergas gebundenen, polymer-basierten Schicht in einem Reaktor erfolgen. Hier erfolgt eine vollständige und stoffschlüssige Beschichtung des Kunststoffrohres innen und außen.

Die Beschichtung ist erfindungsgemäß ein chemisch inerter, Polymer-basierter Werkstoff. Sie kann beispielsweise aus einem Fluorpolymer bestehen, insbesondere aus PTFE (Polytetrafluorethylen), PVDF (Polyvinylidenfluorid), PFA (Perfluoralkoxy-Polymer), FKM (Fluorkautschuk) oder PFPE (Perfluorpolyether). Eine PTFE-Beschichtung hat beispielsweise den Vorteil, dass sie für Trinkwasser zertifiziert ist, so dass die Nassläuferpumpe zur Förderung von Trinkwasser verwendet werden kann. Ferner hat PTFE den Vorteil, dass es chemisch inert ist, Antihaft-Eigenschaften und eine sehr geringe Reibung aufweist und zusätzlich temperaturbeständig ist. Prozesstechnisch hat es den Vorteil, dass es sich relativ einfach auftragen lässt, da dies in einem Niedrigtemperatur-Verfahren erfolgen kann.

Alternativ zu einem Fluorpolymer kann die Beschichtung aus einem Aromaten oder aromatischen Polymer bestehen. Besonders bevorzugt kann PPS oder ein Polyaryletherketon (PAEK) zum Einsatz kommen. PPS hat den Vorteil, dass es mechanisch stabil ist und deshalb wenig verschleißt, was im Hinblick auf mögliche Partikel im Rotorraum vorteilhaft ist. Gleichzeitig hat PPS gute Dichteigenschaften. Es hat auch noch den Vorteil, dass die chemische Bindung an das Kunststoffrohr optimal ist, wenn auch dieses aus PPS besteht. Als bevorzugtes Beispiel für ein Polyaryletherketon kann PEEK (Polyetheretherketon) zum Einsatz kommen. Weitere Alternativen für eine aromatische Polymerbeschichtung sind LCP (Flüssigkristalline Polymere), HPPA (Polyphthalamide), PAI (Polyamidimid) oder PSU (Polysulfone).

Gemäß einer vorteilhaften Weiterbildung kann die Beschichtung keramische Partikel enthalten. Sie bildet somit eine Polymer-Keramikbeschichtung. Dies verstärkt die mechanischen Eigenschaften der Beschichtung.

Um die chemische Verbindung zwischen Kunststoffrohr und Beschichtung zu erreichen, wird die Oberfläche der Innenseite des Kunststoffrohres vor dem Aufbringen der Beschichtung chemisch oder chemisch-physikalisch vorbehandelt, so dass oberflächennahe molekulare Bindungen des ersten Polymers oder der Faserbeschichtung (z.B. Silan) aufgespalten und aktiviert (chemisch reaktiv) werden. Dies erfolgt erfindungsgemäß in einem Niederdruckplasma, vorzugsweise in einem Niederdruckplasmaverfahren, in dem durch Ionenbeschuss die Kunststoffoberfläche des Spaltrohres geätzt und aktiviert wird. In einer nicht beanspruchten Alternative kann die Oberflächenvorbehandlung durch das Eintauchen in ein oder Aufsprühen eines chemisch-physikalisch aktiven Fluides erfolgen, welches die Oberfläche des Kunststoffrohres anätzt.

Gemäß einer weiteren erfindungsgemäßen Alternative erfolgt die Vorbehandlung dadurch, dass zunächst ein Haftvermittler (Primer) auf die Innenseite des Kunststoffrohres aufgebracht, welcher mit diesem eine chemische Bindung eingeht.. Der Haftvermittler bildet in diesem Fall eine Grundierung, auf die dann anschließend die Beschichtung aufgebracht wird, zu welcher der Haftvermittler dann ebenfalls eine chemische Bindung eingeht. Somit erfolgt in dieser Ausführungsvariante die chemische Bindung zwischen Beschichtung und Kunststoffrohr nicht direkt, sondern indirekt über den Haftvermittler, der einerseits eine chemische Bindung mit dem Kunststoffrohr und andererseits eine chemische Bindung mit der Beschichtung eingeht. Zusätzlich zur Haftvermittlung dient der Primer der Reduktion von intrinsischen Spannungen zwischen den Schichtsystemen was wiederum die Haftfestigkeit bei dynamischer (mechanisch) und chemischer Belastung verbessert. Der Haftvermittler kann bevorzugt über ein Niederdruckplasmaverfahren aufgebracht werden. Alternativ kann das Aufbringen eines Haftvermittlers aus der Flüssigphase mittels aufsprühen erfolgen.

Es ist von Vorteil, wenn die Beschichtung eine Maximaldicke nicht überschreitet, beispielsweise maximal 300µm, da im Falle einer zu dicken Beschichtung Risse entstehen könnten. Die Beschichtungsdicke ist zudem abhängig vom Beschichtungsmaterial. So kann die Beschichtungsdicke im Falle der Verwendung von PTFE beispielsweise dicker ausfallen, als bei einer PPS Beschichtung.

Das Kunststoffrohr weist beispielsweise eine Dicke bzw. Wandstärke zwischen 0,25mm und 1,5mm auf. Diese Wandstärke kann bereits mit zwei oder drei Lagen des Bandes erreicht werden.

Der Außendurchmesser des Kunststoffrohres kann zwischen 30mm und 80mm betragen, je nach Motorgröße der Nassläuferpumpe.

In einer Ausführungsvariante kann das Kunststoffrohr an einem axialen Ende eine Aufweitung im Durchmesser aufweisen, die als Montagehilfe für einen Dichtungsring dient, damit dieser formschlüssig abdichten kann.

Des Weiteren kann das Kunststoffrohr in einer Ausführungsvariante außenseitig eine weitere Beschichtung aufweisen. Das Material dieser weiteren Beschichtung kann von der innenseitigen Beschichtung verschieden sein. Es kann jedoch auch identisch zur innenseitigen Beschichtung sein, beispielsweise dann, wenn die innere Beschichtung durch ein Eintauchen des Kunststoffrohres in ein Polymerbad erzeugt wird.

In einer Ausführungsvariante kann das Spaltrohr an einem axialen Ende durch einen Boden geschlossen sein, so dass das Spaltrohr einen Spalttopf bildet. Der Boden kann beispielsweise direkt bei der Wicklung hergestellt werden, indem das Band auch über das axiale Ende des Wickelkerns gewickelt wird. Alternativ kann der Boden separat hergestellt und in einem weiteren Fertigungsschritt an ein Ende des Kunststoffrohres angeschweißt werden.

Bevorzugt wird das Kunststoffrohr als Meterware hergestellt, wobei das Spaltrohr einen abgeschnittenen Abschnitt des Kunststoffrohres bildet oder aus einem abgeschnittenen Abschnitt hergestellt wird. Somit wird beim Wickeln ein längeres Rohr hergestellt, als es benötigt wird, welches anschließend in einzelne Abschnitte abgelängt wird. Hierdurch wird eine im Wesentlichen gleichbleibende Wandstärke des Kunststoffrohres über seine gesamte axiale Länge erreicht, da wicklungsbedingt größere Wandstärken an den Enden des Kunststoffrohres, die durch das Falten des Bandes entstehen, abgeschnitten werden. Die Abschnitte werden dann zu erfindungsgemäßen Spaltrohren weiterverarbeitet, indem innenseitig die erfindungsgemäße Beschichtung aufgebracht wird. Aufgrund der vergleichsweise kurzen Abschnitte ist die Handhabung beim Beschichten und bei einer etwaigen Vorbehandlung einfach.

Es ist jedoch auch möglich, das als Meterware hergestellte Kunststoffrohr zunächst innenseitig zu beschichten und anschließend in die einzelnen Abschnitte aufzutrennen. Diese Verfahrensweise ist vor allem vorteilhaft, wenn die Beschichtung durch Eintauchen des Kunststoffrohres in ein Bad des zweiten Polymers erfolgt, weil die Beschichtung in diesem Fall sogleich über die gesamte axiale Länge erfolgt. Durch das Abtrennen der einzelnen Abschnitte sind dann die Stirnseiten allerdings nicht beschichtet, was im Falle der einzelnen Tauchbeschichtung zuvor abgeschnittener Abschnitte nicht der Fall wäre.

Weitere Merkmale, Vorteile und Eigenschaften des erfindungsgemäßen Spaltrohres sowie seines Herstellungsverfahrens werden nachfolgend anhand von Ausführungsbeispielen und der beigefügten Figuren erläutert.

Es sei darauf hingewiesen, dass im Rahmen der vorliegenden Beschreibung die Begriffe "aufweisen", "umfassen" oder "beinhalten" keinesfalls das Vorhandensein weiterer Merkmale ausschließen. Ferner schließt die Verwendung des unbestimmten Artikels bei einem Gegenstand nicht dessen Plural aus.

Die Bezugszeichen behalten von einer zur anderen Figur ihre Bedeutung. Identische Bezugszeichen bezeichnen identische oder zumindest wirkungsgleiche Elemente. Es zeigen:
- Fig. 1:: ein erfindungsgemäßes Spaltrohr im axialen Querschnitt
- Fig. 1a:: eine Vergrößerung des Ausschnitts X am axialen Endes des Spaltrohres mit einer ersten Ausführungsvariante
- Fig. 1b:: eine Vergrößerung des Ausschnitts X am axialen Endes des Spaltrohres mit einer zweiten Ausführungsvariante
- Fig. 1c:: eine Vergrößerung des Ausschnitts X am axialen Endes des Spaltrohres mit einer dritten Ausführungsvariante
- Fig. 1d:: eine Vergrößerung des Ausschnitts X am axialen Endes des Spaltrohres mit einer vierten Ausführungsvariante
- Fig. 2:: eine Vergrößerung eines Ausschnitts des Schichtübergangs zwischen dem gewickelten Kunststoffrohr und der Beschichtung

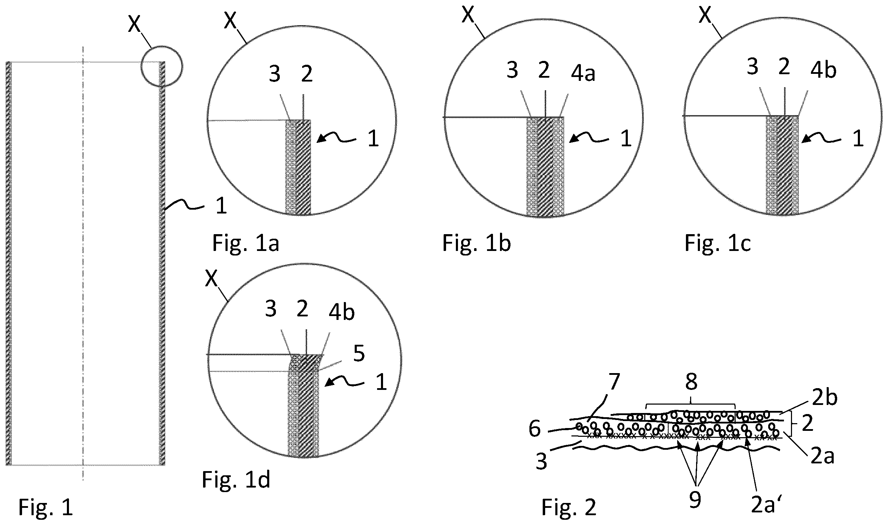

Fig. 1 zeigt ein Spaltrohr 1 für eine Nassläuferpumpe im axialen Querschnitt. Das Spaltrohr 1 besteht aus einem zweilagig gewickelten, kohlefaserverstärkten thermoplastischen Kunststoffrohr 2, nachfolgend CFK-Rohr 2 genannt, das innenseitig eine permeationsmindernde, insbesondere diffusionsdichte Polymerbeschichtung 3 aufweist. Eine Vergrößerung eines Ausschnitts X aus Fig. 1 am axialen Endes des Spaltrohres 1 ist in Fig. 1a dargestellt.

Fig. 2 zeigt außerdem eine vergrößerte Darstellung eines Ausschnitts aus dem Schichtübergang zwischen dem CFK-Rohr 2 und der Beschichtung 3. Das CFK-Rohr 2 besteht aus einem ersten Polymer 7, hier PPS, in welches die Kohlefasern 6 als Endlosfasern eingebettet sind. Das CFK-Rohr 2 ist somit durch einen Faserverbundwerkstoff gebildet, wobei das erste Polymer die sogenannte Matrix ist. Rein beispielhaft sind nur zwei Lagen 2a, 2b eines kontinuierlich gewickelten Bandes 8 gezeigt, wobei es tatsächlich auch drei, vier oder mehr übereinanderliegende Lagen geben kann. Das Band 8 wurde auf einen glatten Wickelkern gewickelt, so dass die Innenseite 2a' des Kunststoffrohres 2 ebenfalls glatt ist. Ein glatter Wickelkern hat den Vorteil, dass das Kunststoffrohr 2 leicht von diesem herunter geschoben werden kann. Auf besagter Innenseite 2a' ist die Beschichtung 3 aufgebracht, von der in Fig. 2 nur ein Ausschnitt dargestellt ist.

Die Beschichtung 3 besteht hier rein beispielhaft aus PTFE, was besonders abriebfest und für Trinkwasser geeignet ist, sowie die chemische Beständigkeit des aus PPS hergestellten CFK-Rohres 2 erhöht. Die Beschichtung 3 versiegelt das CFK-Rohr 2, welches herstellungsbedingt Fehlstellen, Kapillare oder freiliegende, insbesondere schlecht mit Matrix benetzte Faserbereiche aufweisen kann. Allgemein bieten Fluorpolymere wie PTFE eine noch bessere Dichtigkeit (Permeationsbarriere) und eine noch besser Flüssigkeitsabweisende Eigenschaft. Auch sind die physikalischen Oberflächenspannungen, Abriebfestigkeiten und Permeationsraten besser. Des Weiteren haben Fluorpolymere den Vorteil guter Trockenreib-Eigenschaften, was die Montage von elastomeren Dichtungen verbessert. So führt eine PTFE Beschichtung zu geringeren Reibkräften bei der Montage.

Alternativ kann die Beschichtung aus PPS bestehen, was den Vorteil hat, dass sie wesentlich kompatibler zur PPS-Matrix des CFK-Matrixmaterials (ebenfalls z.B. PPS) ist, wobei PPS ebenfalls bereits gute Eigenschaften bezüglich der chemischen Beständigkeit aufweist und für Pumpenanwendungen geeignet ist.

Zwischen dem CFK-Rohr 2 und der Beschichtung 3 besteht auf molekularer Ebene eine chemische Bindung 9, so dass ein stoffschlüssiger Werkstoffverbund aus dem ersten und zweiten Polymer 7, 3 und/ oder der Kohlefasern 6 und dem zweiten Polymer 3 vorliegt. Dies gewährleistet eine Diffusionsdichtheit und Abriebfestigkeit.

In einer nicht dargestellten Ausführungsvariante könnte auch noch ein Haftvermittler (Primer) an dem Werkstoffverbund teilhaben, und einen Stoffschluss sowohl zum ersten Polymer 7 und/ oder den Kohlefasern 6, als auch zum zweiten Polymer 3 haben.

Um die chemische Bindung 9 zu erreichen, wird die Innenseite 2a' des CFK-Rohrs 2 vorbehandelt, so dass oberflächennahe chemische Bindungen des ersten Polymers oder einer zur Verbesserung der Matrixhaftung gegebenenfalls vorhandenen Kohlefaserbeschichtung, welche beispielsweise Silan sein kann, auf molekularer Ebene aufgebrochen und damit reaktiv werden. Dies erfolgt durch einen entsprechenden Energieeintrag, der beispielsweise thermisch, d.h. durch Erhitzen, chemisch, beispielsweise durch Anätzen, oder chemo-physikalisch, beispielsweise durch ein Plasma eingebracht werden kann. Das Anätzen kann durch den Haftvermittler erfolgen.

Bei einer Vorbehandlung mittels Plasma wird das CFK-Rohr 2 in ein Gas gebracht, das anschließend durch Zuführung von Energie ionisiert wird, wobei Elektronen die Atomhüllen des Gases verlassen und positiv geladene Ionen entstehen. Das CFK-Rohr 2 wirkt als Anode. Die Elektronen werden deshalb zum CFK-Rohr 2 beschleunigt und schießen Löcher in den Werkstoff. Genauer gesagt werden infolge dieses Bombardements die Bindungen des ersten Polymers 7 und/ oder der Kohlefaserbeschichtung aufgebrochen, indem dort Bindungselektronen herausgeschlagen werden. Es bleiben dann offene, chemisch reaktive Bindungen im CFK-Rohr 2 zurück. Um zu erreichen, dass die Vorbehandlung nur an der Innenseite 2a' des CFK-Rohres 2 erfolgt, d.h. nicht auch außen, kann vorgesehen sein, dass die Erzeugung des ionisierten Gases ausschließlich im vom CFK-Rohr eingeschlossenen Innenraum erfolgt. Durch die unmittelbar anschließende Beschichtung der Innenseite 2a' des CFK-Rohres 2 setzen sich Moleküle des zweiten Polymers 3 an die offenen Bindungen und bilden damit einen neuen, stofflichen Werkstoffverbund zwischen CFK-Rohr 2 und Beschichtung 3.

Fig. 1b und 1c zeigen eine zweite und dritte Ausführungsvariante, bei der das Spaltrohr 1 auch auf seiner Außenseite eine Beschichtung 4a, 4b aufweist. Diese Außenbeschichtung 4a ist in der zweiten Ausführungsvariante gemäß Fig. 1b bezüglich des Materials und der Dicke identisch zur Innenbeschichtung 3. Sie kann beispielsweise gemeinsam mit der Innenbeschichtung 3 durch Eintauchen in ein Polymerbad erzeugt worden und somit verfahrenstechnisch bedingt sein, ohne dass die Außenbeschichtung 4a einen besonderen Zweck erfüllt oder gewünscht ist.

In der dritten Ausführungsvariante gemäß Fig. 1c ist die Außenbeschichtung 4b dagegen zur Innenbeschichtung 3 verschieden und/ oder dünner als bei der zweiten Ausführungsvariante ausgebildet. Die Außenbeschichtung 4b kann gemäß einem bestimmten gewünschten funktionalen Zweck, wie z.B. Reibungsminimierung, gewählt und mit einem bestimmten Auftragungsverfahren aufgebracht worden sein.

Fig. 1c zeigt eine Weiterbildung der dritten Ausführungsvariante, wobei in dieser Weiterbildung das Spaltrohr 1 an seinem axialen Ende eine Durchmesseraufweitung 5 besitzt. Diese Aufweitung bildet eine Fügefase für die Montage von elastomeren Dichtungen, z.B. Dichtringen (O-Ringen). Ohne Fase wäre ein Aufsetzen und Einführen einer runden Dichtung schwieriger bzw. bestünde die Gefahr einer Beschädigung oder einem Verdrillen der O-Ring-Dichtung beim Aufschieben.

Es sei darauf hingewiesen, dass die vorstehende Beschreibung lediglich beispielhaft zum Zwecke der Veranschaulichung gegeben ist und den Schutzbereich der Erfindung keineswegs einschränkt. Merkmale der Erfindung, die als "kann", "beispielhaft", "bevorzugt", "optional", "ideal", "vorteilhaft", "gegebenenfalls" oder "geeignet" angegeben sind, sind als rein fakultativ zu betrachten und schränken ebenfalls den Schutzbereich nicht ein, welcher ausschließlich durch die Ansprüche festgelegt ist.

## Patentansprüche

1. Spaltrohr (1) für eine Nassläuferpumpe, das aus einem formstabilen Kunststoffrohr (2) besteht, das aus einem Band (8) aus einem endlosfaserverstärkten thermoplastischen Kunststoff (7) gewickelt ist, wobei das Kunststoffrohr (2) innenseitig eine permeationsmindernde polymerbasierte Beschichtung (3) aus einem Fluorpolymer oder einem aromatischen Polymer aufweist und eine chemische Bindung (9) zwischen dem Kunststoffrohr (2) und der Beschichtung (3) besteht.

2. Spaltrohr (1) nach Anspruch 1, **dadurch gekennzeichnet, dass** die Beschichtung (3) aus PTFE besteht.

3. Spaltrohr (1) nach Anspruch 1, **dadurch gekennzeichnet, dass** die Beschichtung (3) aus PPS oder PEEK besteht.

4. Spaltrohr (1) nach einem der vorherigen Ansprüche, **dadurch gekennzeichnet, dass** die Beschichtung (3) keramische Partikel enthält.

5. Spaltrohr (1) nach einem der vorherigen Ansprüche, **dadurch gekennzeichnet, dass** die Beschichtung (3) eine Dicke von maximal 300µm aufweist.

6. Spaltrohr (1) nach einem der vorherigen Ansprüche, **dadurch gekennzeichnet, dass** das Kunststoffrohr (2) eine Dicke zwischen 0,25mm und 1,5mm aufweist.

7. Spaltrohr (1) nach einem der vorherigen Ansprüche, **dadurch gekennzeichnet, dass** das Kunststoffrohr (2) an einem axialen Ende eine Aufweitung (5) im Durchmesser aufweist.

8. Spaltrohr (1) nach einem der vorherigen Ansprüche, **dadurch gekennzeichnet, dass** das Kunststoffrohr (2) außenseitig eine weitere Beschichtung (4) aufweist, die insbesondere identisch zur innenseitigen Beschichtung (3) ist.

9. Spaltrohr (1) nach einem der vorherigen Ansprüche, **dadurch gekennzeichnet, dass** das Kunststoffrohr (2) aus PPS, PPA, PA oder PC gebildet ist.

10. Spaltrohr (1) nach einem der vorherigen Ansprüche, **dadurch gekennzeichnet, dass** die Endlosfasern Kohlefasern sind.

11. Verfahren zur Herstellung eines Spaltrohres (1) für eine Nassläuferpumpe nach einem der Ansprüche 1 bis 10, bei dem ein Band (8) aus einem endlosfaserverstärkten ersten thermoplastischen Kunststoff (7) auf einen Wickelkern zwei- oder mehrlagig aufgewickelt und anschließend zur Bildung eines formstabilen Kunststoffrohres (2) konsolidiert, insbesondere aufgeschmolzen wird, wobei das Kunststoffrohr (2) innenseitig mit einer permeationsmindernden, polymerbasierten Beschichtung (3) aus einem Fluorpolymer oder einem aromatischen Polymer derart beschichtet wird, dass eine chemische Bindung (9) zwischen dem Kunststoffrohr (2) und der Beschichtung (3) besteht, wobei die Innenseite des Kunststoffrohres (2) chemisch oder chemisch-physikalisch in einem Niederdruckplasma vorbehandelt wird, um vor dem Aufbringen der Beschichtung (3) oberflächennahe molekulare Bindungen des ersten Kunststoffs (7) oder einer Beschichtung der Endlosfasern (6) aufzuspalten, und/ oder die chemische Bindung (9) über einen Haftvermittler erfolgt, der einerseits eine chemische Bindung (9) mit dem Kunststoffrohr (2) und andererseits eine chemische Bindung (9) mit der Beschichtung (3) eingeht.

12. Verfahren nach Anspruch 11, **dadurch gekennzeichnet, dass** die Beschichtung (3) durch Aufsprühen erzeugt wird.

13. Verfahren nach Anspruch 11 oder 12, **dadurch gekennzeichnet, dass** die Beschichtung (3) durch Abscheidung in einem Niedrigtemperatur-Verfahren erzeugt wird.

14. Verfahren nach Anspruch 11, **dadurch gekennzeichnet, dass** die Beschichtung (3) durch Eintauchen des Kunststoffrohres (2) in ein Bad (Dip-Coating) erzeugt wird.

15. Verfahren nach einem der Ansprüche 11 bis 14, **dadurch gekennzeichnet, dass** das Kunststoffrohr (2) als Meterware hergestellt wird und das Spaltrohr (1) einen abgeschnittenen Abschnitt des Kunststoffrohres (2) bildet oder aus einem abgeschnittenen Abschnitt hergestellt wird.

## Claims

1. Split tube (1) for a wet rotor pump, consisting of a dimensionally stable plastic tube (2) made by winding a tape (8) of endless-fibre reinforced thermoplastic plastic material (7), wherein the plastic tube (2) has an inner permeation-reducing polymer-based coating (3) made of a fluoropolymer or aromatic polymer and there is a chemical bond (9) between the plastic tube (2) and the coating (3).

2. Split tube (1) according to claim 1, **characterised in that** the coating (3) is made of PTFE.

3. Split tube (1) according to claim 1, **characterised in that** the coating (3) is made of PPS or PEEK.

4. Split tube (1) according to one of the preceding claims, **characterised in that** the coating (3) contains ceramic particles.

5. Split tube (1) according to one of the preceding claims, **characterised in that** the coating (3) has a thickness of no more than 300µm.

6. Split tube (1) according to one of the preceding claims, **characterised in that** the plastic tube (2) has a thickness of 0.25 mm to 1.5 mm.

7. Split tube (1) according to one of the preceding claims, **characterised in that** the plastic tube (2) has an enlargement of the diameter (5) of at one axial end.

8. Split tube (1) according to one of the preceding claims, **characterised in that** the plastic tube (2) has an additional outer coating (4) that, in particular, is identical to the inner coating (3).

9. Split tube (1) according to one of the preceding claims, **characterised in that** the plastic tube (2) is made of PPS, PPA, PA or PC.

10. Split tube (1) according to one of the preceding claims, **characterised in that** the endless fibres are carbon fibres.

11. Method for the production of a split tube (1) for a wet rotor pump according to one of the claims 1 through 10, in which a tape (8) of a first endless-fibre reinforced thermoplastic plastic material (7) is wound on a winding core in two or more layers and subsequently consolidated, in particular fused, to form a dimensionally stable plastic tube (2), wherein the inside of the plastic tube (2) is coated with a permeation-reducing polymer-based coating (3) made of a fluoropolymer or an aromatic polymer so that a chemical bond (9) is formed between the plastic tube (2) and the coating (3), wherein the inside of the plastic tube (2) being chemically or chemically-physically pre-treated in a low-pressure plasma in order to break apart molecular bonds close to the surface of the first synthetic material (7) or of a coating of the endless fibres (6) before applying the coating (3), and/or with the chemical bond (9) being realised using a bonding agent that forms a chemical bond (9) with the plastic tube (2) on the one hand and a chemical bond (9) with the coating (3) on the other hand.

12. Method according to claim 11, **characterised in that** the coating (3) is produced using spray application.

13. Method according to claim 11 or 12, **characterised in that** the coating (3) is produced by precipitation in a low-temperature process.

14. Method according to claim 11, **characterised in that** the coating (3) is produced by dipping the plastic tube (2) in a bath (dip coating).

15. Method according to one of the claims 11 through 14, **characterised in that** the plastic tube (2) is produced as bulk stock and the split tube (1) is a cut section of the plastic tube (2) or is made from a cut section.

## Revendications

1. Tube de séparation (1) destiné à une pompe à rotor noyé, constitué d'un tube en matière plastique dimensionnellement stable (2) formé par enroulement d'une bande (8) en matière thermoplastique (7) renforcée par des fibres continues, **sachant que** le tube en matière plastique (2) comporte, sur sa face interne, un revêtement à base de polymère réduisant la perméabilité (3) constitué d'un fluoropolymère ou d'un polymère aromatique, et qu'il existe une liaison chimique (9) entre le tube en matière plastique (2) et le revêtement (3).

2. Tube de séparation (1) selon la revendication 1, **caractérisée en ce que** le revêtement (3) est en PTFE.

3. Tube de séparation (1) selon la revendication 1, **caractérisée en ce que** le revêtement (3) est en PPS ou PEEK.

4. Tube de séparation (1) selon l'une des revendications précédentes,
**caractérisée en ce que** le revêtement (3) contient des particules en céramique.

5. Tube de séparation (1) selon l'une des revendications précédentes,
**caractérisée en ce que** le revêtement (3) présente une épaisseur maximale de 300 µm.

6. Tube de séparation (1) selon l'une des revendications précédentes,
**caractérisée en ce que** le tube en matière plastique (2) présente une épaisseur entre 0,25 mm et 1,5 mm.

7. Tube de séparation (1) selon l'une des revendications précédentes,
**caractérisée en ce que** le tube en matière plastique (2) présente à une extrémité axiale un élargissement (5) de son diamètre.

8. Tube de séparation (1) selon l'une des revendications précédentes,
**caractérisée en ce que** le tube en matière plastique (2) présente, sur sa face extérieure, un autre revêtement (4) qui est notamment identique au revêtement intérieur (3).

9. Tube de séparation (1) selon l'une des revendications précédentes,
**caractérisée en ce que** le tube en matière plastique (2) est en PPS, PPA, PA ou PC.

10. Tube de séparation (1) selon l'une des revendications précédentes,
**caractérisée en ce que** les fibres continues sont des fibres de carbone.

11. Procédé de fabrication d'une tube de séparation (1) destiné à une pompe à rotor noyé selon l'une des revendications 1 à 10, dans laquelle une bande (8) constituée d'un premier thermoplastique (7) renforcé de fibres continues est enroulée en deux ou plusieurs couches sur un noyau d'enroulement, puis consolidée pour former un tube en matière plastique (2) indéformable, en particulier par fusion, **sachant que** le tube en matière plastique (2) est revêtu sur sa face interne d'un revêtement (3) à base de polymère réduisant la perméabilité, constitué d'un fluoropolymère ou d'un polymère aromatique, de telle sorte qu'il se forme une liaison chimique (9) entre le tube en matière plastique (2) et le revêtement (3), sachant que la face interne du tube en matière plastique (2) est prétraitée chimiquement ou physico-chimiquement dans un plasma à basse pression pour rompre, avant l'application du revêtement (3), les liaisons moléculaires proches de la surface de la première matière plastique (7) ou d'un revêtement des fibres continues (6), et/ou la liaison chimique (9) s'effectue par l'intermédiaire d'un agent adhésif qui forme, d'une part, une liaison chimique (9) avec le tube en matière plastique (2) et, d'autre part, une liaison chimique (9) avec le revêtement (3).

12. Procédé selon la revendication 11, **caractérisé en ce que** le revêtement (3) est obtenu par pulvérisation.

13. Procédé selon la revendication 11 ou 12, **caractérisé en ce que**, le revêtement (3) est obtenu par dépôt selon un procédé à basse température.

14. Procédé selon la revendication 11, **caractérisé en ce que** le revêtement (3) est obtenu par immersion du tube en matière plastique (2) dans un bain (revêtement par immersion).

15. Procédé selon l'une des revendications 11 à 14, **caractérisé en ce que** le tube en matière plastique (2) est disponible au mètre et **en ce que** la Tube de séparation (1) est constituée d'un tronçon découpé du tube en matière plastique (2) ou est fabriqué à partir d'un tel tronçon.
